# FASCICULE DE BREVET EUROPEEN

(11) **EP 0 715 979 B1**
(45) Date de publication et mention de la délivrance du brevet: **13.02.2002**
(21) Numéro de dépôt: 95119446.3
(22) Date de dépôt: 08.12.1995
(51) Int. Cl.: B60H 1/32

(54) **Dispositif pour la climatisation d'un véhicule en circulation et en stationnement**
Klimavorrichtung für ein abgestelltes und fahrendes Fahrzeug
Device for the air conditioning of a parked or travelling vehicle

(30) Priorité: 09.12.1994 FR 9414871
(43) Date de publication de la demande: 12.06.1996
(73) Titulaire: VALEO CLIMATISATION, 78320 Le Mesnil Saint-Denis (FR)
(72) Inventeur: Karl, Stefan, 75015 Paris (FR)

(56) Documents cités:
- FR-A- 2 690 387
- GB-A- 985 435
- US-A- 3 720 842
- US-A- 3 844 130
- US-A- 5 105 096
- US-A- 5 249 429

## Description

L'invention concerne un dispositif de climatisation de l'habitacle d'un véhicule automobile comprenant des moyens pour envoyer un courant d'air dans l'habitacle, un compresseur propre à faire circuler un fluide réfrigérant dans un circuit comprenant un évaporateur pour transférer de la chaleur dudit courant d'air audit fluide réfrigérant, des moyens étant prévus pour faire tourner le compresseur lorsque le moteur principal d'entraînement du véhicule fonctionne et également lorsque le véhicule est en stationnement, et le véhicule étant équipé d'un alternateur entraîné par le moteur principal pour produire de l'électricité.

Un tel dispositif permet, lorsque l'air est très chaud dans l'habitacle du véhicule en stationnement, de le ramener à une température plus acceptable avant que les occupants du véhicule y prennent place, comme exposé par exemple dans FR-A-2 690 387.

Dans un dispositif connu de ce genre, notamment pour un véhicule à moteur thermique, le compresseur est entraîné par un moteur électrique spécial aussi bien lorsque le moteur principal fonctionne que lorsque le véhicule est en stationnement. Ce moteur électrique présente une consommation d'énergie relativement élevée. De plus, en stationnement, le dispositif est alimenté par la batterie de bord du véhicule. Si l'utilisation du dispositif dans ces conditions se prolonge, la batterie risque d'être déchargée au point de ne plus permettre le démarrage du moteur thermique.

Le but de l'invention est de fournir un dispositif plus simple que le dispositif connu.

Un autre but est de réduire la consommation électrique du dispositif en stationnement.

Un autre but enfin est d'empêcher que l'utilisation du dispositif conduise à un épuisement de la batterie de bord du véhicule.

L'invention vise notamment un dispositif du genre défini en introduction, et prévoit que l'entraînement du compresseur est réalisé par le moteur principal lorsque celui-ci fonctionne et par l'alternateur, alimenté en électricité de façon à fonctionner en moteur, lorsque le véhicule est en stationnement et que le disposifif peut être programmé pour entrer en service à une heure définie. Le moteur électrique d'entraînement du compresseur est ainsi supprimé, ce qui simplifie le dispositif.

Des caractéristiques optionnelles du dispositif selon l'invention, complémentaires ou alternatives, sont énoncées ci-après :
- L'alternateur tourne dans le même sens lorsqu'il est entraîné par le moteur-principal et lorsqu'il fonctionne en moteur, et l'alternateur et le compresseur sont solidaires en rotation d'un organe rotatif lui-même couplé au moteur principal par une transmission unidirectionnelle de façon à être entraîné par le moteur principal lorsque celui-ci fonctionne et à ne pas entraîner le moteur principal lorsque l'alternateur fonctionne en moteur.
- L'alternateur est alimenté en courant triphasé pour fonctionner en moteur. Ce mode d'alimentation entraîne une économie d'énergie par rapport à l'alimentation en courant monophasé du moteur du dispositif connu.
- Il comprend un commutateur permettant de raccorder l'alternateur soit à un régulateur pour recueillir le courant qu'il produit, soit à des organes de commande pour son alimentation en moteur.
- Il comprend des organes de commande pour l'alimentation de l'alternateur en moteur propres à faire tourner celui-ci à une vitesse variable.
- Il comprend une batterie d'accumulateurs auxiliaire indépendante de la batterie principale du véhicule, l'alimentation électrique du dispositif lorsque le véhicule est en stationnement étant assuré exclusivement par la batterie auxiliaire. Dans ces conditions, l'utilisation prolongée du dispositif en stationnement entraîne l'épuisement de la batterie auxiliaire. Le dispositif cesse alors d'exercer ses fonctions, mais la batterie principale reste disponible pour assurer l'alimentation des équipements essentiels du véhicule, et en particulier du démarreur. La batterie auxiliaire peut être rechargée, de même que la batterie principale, par l'alternateur lorsque le moteur principal fonctionne.
- La batterie auxiliaire présente une tension nominale plus élevée que la batterie principale, par exemple une tension de 48 V au lieu de 12 V, facilitant l'alimentation de l'alternateur.
- La batterie auxiliaire est raccordée à des composants n'intervenant pas dans la climatisation et fonctionnant à ladite tension plus élevée.

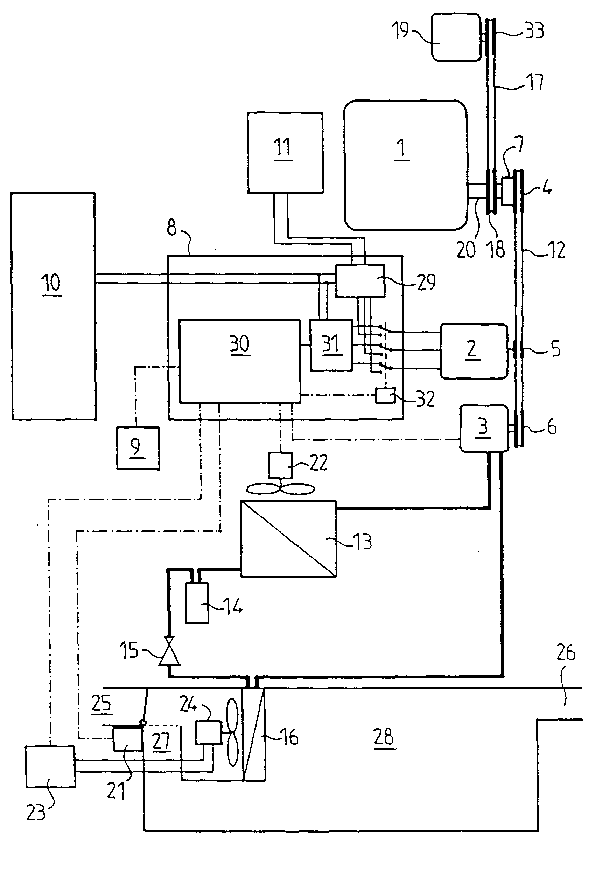

Les caractéristiques et avantages de l'invention seront exposés plus en détail dans la description ci-après, en se référant au dessin annexé, sur lequel la figure unique représente un schéma fonctionnel d'un dispositif selon l'invention associé au moteur thermique d'un véhicule automobile.

Le dispositif illustré comprend un circuit classique de fluide réfrigérant comportant un compresseur 3, un condenseur 13, un réservoir de fluide 14, un détendeur 15 et un évaporateur 16, associé à des moto-ventilateurs 22 et 24 destinés à produire des courants d'air en échange thermique avec le condenseur 13 et l'évaporateur 16 respectivement. Dans l'exemple représenté, le courant d'air produit par le moto-ventilateur 24 et refroidi par l'évaporateur 16 est envoyé dans l'habitacle 28 du véhicule lorsqu'on veut y abaisser la température. Un volet pivotant 21 permet d'aspirer par le moto-ventilateur 24 de l'air provenant soit de l'extérieur du véhicule par une entrée 25, soit de l'habitacle lui-même par une conduite de recirculation 27. Dans le premier cas, une sortie 26 permet l'évacuation d'air de l'habitacle vers l'extérieur.

De façon connue, un circuit de commande 30, relié à un tableau de commande 9 placé sur la planche de bord du véhicule, commande les paramètres de fonctionnement du dispositif de climatisation, notamment l'embrayage du compresseur 3, la position du volet 21 et l'alimentation des moto-ventilateurs 22 et 24, ce dernier par l'intermédiaire d'un variateur de vitesse 23.

Une poulie 6 montée sur l'axe du compresseur 3 est couplée à deux autres poulies 4 et 5 par une courroie 12. Les axes des trois poulies étant parallèles et non coplanaires, la courroie circule par exemple en triangle. La poulie 4 est montée sur le vilebrequin 20 du moteur thermique 1 par l'intermédiaire d'un mécanisme de roue libre 7 qui permet à la poulie d'être entraînée par le moteur 1 lorsque celui-ci fonctionne. L'alternateur 2 du véhicule, sur l'arbre duquel est montée la poulie 5, et le compresseur 3 sont alors entraînés par l'intermédiaire de la courroie 12. De façon connue, l'alternateur 2 produit un courant triphasé qui est redressé et régulé par un régulateur 29 pour alimenter le circuit électrique 11 du véhicule, lequel comprend une batterie de bord servant notamment au démarrage du moteur 1.

Selon l'invention, l'alternateur 2 peut également être alimenté de façon à fonctionner en moteur, au moyen d'une batterie auxiliaire 10, du circuit de commande 30, d'un convertisseur 31 permettant de faire varier la fréquence d'un courant triphasé et d'un commutateur 32, ces trois derniers éléments étant regroupés avec le régulateur 29 dans un boîtier électronique 8. La batterie 10, qui est également chargée par l'alternateur 2, à travers le régulateur 29, lorsque le moteur 1 fonctionne, fournit un courant qui est converti par le convertisseur 31 en un courant alternatif triphasé adapté à l'alimentation de l'alternateur 2. Le commutateur triphasé 32 permet de raccorder l'alternateur soit au régulateur 29 lors du fonctionnement du moteur 1, soit au convertisseur 31 pour le fonctionnement de l'alternateur en moteur.

À cet effet, le circuit 30 envoie au convertisseur 31 et au commutateur 32 les ordres permettant le fonctionnement de l'alternateur en moteur, de façon qu'il tourne dans le même sens que lorsqu'il est entraîné par le moteur 1. Le compresseur 3 est alors entraîné de façon normale par l'intermédiaire de la courroie 12. Le mécanisme de roue libre 7 permet à la poulie 4 de tourner dans le sens de rotation du vilebrequin 20 bien que celui-ci soit immobile. Avantageusement, le convertisseur 31, sous la commande du circuit 30, permet un réglage de la vitesse de l'alternateur de façon à adapter aux besoins la consommation d'énergie de celui-ci et la puissance du circuit de fluide réfrigérant.

Le référence 19 désigne un équipement auxiliaire entraîné par le moteur 1 par l'intermédiaire d'une courroie 17 en prise avec des poulies 18 et 33 solidaires respectivement du vilebrequin 20 et de l'arbre de l'équipement 19. Plusieurs tels équipements peuvent être prévus tels qu'une pompe pour un liquide de refroidissement et une pompe hydraulique.

De préférence, la batterie auxiliaire 10 a une tension nominale plus élevée que la batterie principale de démarrage, ces deux tensions pouvant être par exemple 48 V et 12 V respectivement.

Lorsque le moteur 1 tourne, le dispositif selon l'invention fonctionne à la manière d'un dispositif de climatisation classique, si ce n'est que la batterie auxiliaire 10 est rechargée, ou maintenue en charge, en même temps que la batterie principale.

Le dispositif peut en outre être programmé pour entrer en service à une heure déterminée alors que le véhicule est en stationnement. La programmation peut être réalisée, avant de quitter le véhicule, au moyen de touches de programmation prévues sur le tableau de commande 9. Il est également possible de mettre le dispositif en service par une télécommande. Ces deux possibilités peuvent être combinées, la télécommande réalisant une programmation qui déclenche à son tour la mise en service du dispositif à une heure choisie.

Lorsque le véhicule est en stationnement au soleil, le fonctionnement du dispositif selon l'invention comporte avantageusement une première phase destinée à remplacer l'air chaud contenu dans l'habitacle par de l'air extérieur, comme décrit dans FR-A-2 690 387. Ce renouvellement de l'air est obtenu par l'action du moto-ventilateur 24, le volet 21 étant dans la position d'ouverture de l'entrée d'air 25 et de fermeture de la conduite de recirculation 27. Dans cette première phase, l'alternateur 2 n'est pas alimenté et le circuit de fluide réfrigérant est hors service.

Lorsque l'air dans l'habitacle est ramené approximativement à la température extérieure, le circuit de commande 30 déclenche l'alimentation de l'alternateur 2 qui entraîne le compresseur 3 de façon à permettre l'abaissement de la température de l'air dans l'habitacle au-dessous de la température extérieure. Avantageusement, l'entrée 25 est alors fermée et la conduite 27 ouverte par le volet 21. De même que dans le fonctionnement en circulation, une température de consigne peut être choisie, qui devra être atteinte puis maintenue grâce au dispositif.

La batterie auxiliaire 10 peut être utilisée, indépendamment de la climatisation, pour alimenter des composants fonctionnant à cette tension plus élevée, par exemple pour le chauffage électrique du pare-brise, des sièges ou de l'habitacle avec par exemple des radiateurs électriques servant de chauffage d'appoint.

## Revendications

1. Dispositif de climatisation de l'habitacle d'un véhicule automobile comprenant des moyens (24) pour envoyer un courant d'air dans l'habitacle, un compresseur (3) propre à faire circuler un fluide réfrigérant dans un circuit comprenant un évaporateur (16) pour transférer de la chaleur dudit courant d'air audit fluide réfrigérant, des moyens étant prévus pour faire tourner le compresseur lorsque le moteur principal (1) d'entraînement du véhicule fonctionne et également lorsque le véhicule est en stationnement, et le véhicule étant équipé d'un alternateur (2) entraîné par le moteur principal pour produire de l'électricité, **caractérisé en ce que** l'entraînement du compresseur est réalisé par le moteur principal lorsque celui-ci fonctionne et par l'alternateur, alimenté en électricité de façon à fonctionner en moteur, lorsque le véhicule est en stationnement et **en ce que** le dispositif peut être programmé pour entrer en service à une heure définie.

2. Dispositif selon la revendication 1, **caractérisé en ce que** l'alternateur tourne dans le même sens lorsqu'il est entraîné par le moteur principal et lorsqu'il fonctionne en moteur et que l'alternateur et le compresseur sont solidaires en rotation d'un organe rotatif (4) lui-même couplé au moteur principal par une transmission unidirectionnelle (7) de façon à être entraîné par le moteur principal lorsque celui-ci fonctionne et à ne pas entrainer le moteur principal lorsque l'alternateur fonctionne en moteur.

3. Dispositif selon l'une des revendications 1 et 2, **caractérisé en ce que** l'alternateur est alimenté en courant triphasé pour fonctionner en moteur.

4. Dispositif selon l'une des revendications précédentes, **caractérisé en ce qu'**il comprend un commutateur (32) permettant de raccorder l'alternateur soit à un régulateur (29) pour recueillir le courant qu'il produit, soit à des organes de commande (30, 31) pour son alimentation en moteur.

5. Dispositif selon l'une des revendications précédentes, **caractérisé en ce qu'**il comprend des organes de commande (30, 31) pour l'alimentation de l'alternateur en moteur propres à faire tourner celui-ci à une vitesse variable.

6. Dispositif selon l'une des revendications précédentes, **caractérisé en ce qu'**il comprend une batterie d'accumulateurs auxiliaire (10) indépendante de la batterie principale du véhicule, l'alimentation électrique du dispositif lorsque le véhicule est en stationnement étant assuré exclusivement par la batterie auxiliaire.

7. Dispositif selon la revendication 6, **caractérisé en ce que** la batterie auxiliaire présente une tension nominale plus élevée que la batterie principale.

8. Dispositif selon la revendication 7, **caractérisé en ce que** la batterie auxiliaire est raccordée à des composants n'intervenant pas dans la climatisation et fonctionnant à ladite tension plus élevée.

## Claims

1. Device for air-conditioning the passenger compartment of a motor vehicle, comprising means (24) for sending a current of air into the passenger compartment, a compressor (3) suitable for making a refrigerant fluid circulate in a circuit comprising an evaporator (16) in order to transfer heat from the said air current to the said refrigerant fluid, means being provided to make the compressor turn when the main drive engine (1) of the vehicle is operating and also when the vehicle is parked, and the vehicle being equipped with an alternator (2) driven by the main engine in order to produce electricity, **characterised in that** the driving of the compressor is undertaken by the main engine when it is operating and by the alternator, supplied with electricity in such a way as to operate as a motor, when the vehicle is parked, and **in that** the device can be programmed to come into service at a defined time.

2. Device according to Claim 1, **characterised in that** the alternator turns in the same direction when it is driven by the main engine and when it is operating as a motor, and **in that** the alternator and the compressor rotate as one with a rotating element (4) itself coupled to the main engine by a unidirectional transmission (7) in such a way as to be driven by the main engine when it is operating and not to drive the main engine when the alternator is operating as a motor.

3. Device according to one of Claims 1 and 2, characterised in that the alternator is supplied with three-phase current for operating as a motor.

4. Device according to one of the preceding claims, **characterised in that** it comprises a changeover switch (32) making it possible to connect the alternator either to a regulator (29) for taking up the current which it produces, or to control units (30, 31) for supplying it with power as a motor.

5. Device according to one of the preceding claims, **characterised in that** it comprises control units (30, 31) for supplying the alternator with power as a motor, which are suitable for making it turn at a variable speed.

6. Device according to one of the preceding claims, **characterised in that** it comprises an auxiliary battery of accumulators (10) which is independent of the main battery of the vehicle, the electrical power supply for the device when the vehicle is parked being provided exclusively by the auxiliary battery.

7. Device according to Claim 6, **characterised in that** the auxiliary battery features a nominal voltage higher than the main battery.

8. Device according to Claim 7, **characterised in that** the auxiliary battery is connected to components not participating in the air-conditioning, and operating at the said higher voltage.

## Patentansprüche

1. Kraftfahrzeuginnenraum-Klimaanlage, umfassend eine Einrichtung (24) zum Richten einer Luftströmung in den Innenraum, einen Kompressor (3), der ein Kältefluid in einem Kreis zirkulieren lassen kann, welcher einen Verdampfer (16) zur Übertragung der Wärme der Luftströmung auf das Kältefluid umfasst, wobei eine Einrichtung vorgesehen ist, um. den Kompressor anzutreiben oder zu drehen, wenn der Hauptantriebsmotor (1) des Fahrzeuges in Betrieb ist, und ebenfalls, wenn das Fahrzeug steht oder geparkt ist, wobei das Fahrzeug mit einer Lichtmaschine (2) ausgestattet ist, die von dem Hauptmotor angetrieben wird, um Strom zu erzeugen, **dadurch gekennzeichnet, dass** der Antrieb des Kompressors von dem Hauptmotor dargestellt wird, wenn dieser in Betrieb ist, und von der Lichtmaschine, die mit Strom versorgt wird, so dass sie als Motor dient, wenn das Fahrzeug steht oder parkt, und dass die Anlage programmiert werden kann, um bei einer vorbestimmten Uhrzeit in Betrieb genommen zu werden.

2. Anlage nach Anspruch 1, **dadurch gekennzeichnet, dass** die Lichtmaschine sich in derselben Richtung dreht, wenn sie von dem Hauptmotor angetrieben wird, wie wenn sie als Motor funktioniert, wobei die Lichtmaschine und der Kompressor drehfest zu einem drehbaren Organ (4) sind, welches selbst mit dem Hauptmotor über eine unidirektionelle Übertragung bzw. Getriebe (7) gekoppelt ist, so dass es von dem Hauptmotor angetrieben wird, wenn dieser in Betrieb ist, und nicht den Hauptmotor antreibt, wenn die Lichtmaschine als Motor funktioniert bzw. wirkt bzw. dient.

3. Anlage nach einem der Ansprüche 1 und 2, **dadurch gekennzeichnet, dass** die Lichtmaschine mit einem Dreiphasenstrom versorgt wird, um als Motor zu dienen.

4. Anlage nach einem der vorangegangenen Ansprüche, **dadurch gekennzeichnet, dass** sie einen Schalter (32) umfasst, der es ermöglicht, dass die Lichtmaschine entweder an einen Regler (29) angeschlossen wird, um den Strom sammeln zu können, den sie produziert, oder mit einer Steuereinrichtung (30, 31) für deren Speisung als Motor.

5. Anlage nach einem der vorangegangenen Ansprüche, **dadurch gekennzeichnet, dass** sie eine Steuereinrichtung (30, 31) umfasst, um die Lichtmaschine als Motor in solch einer Weise zu versorgen, dass diese bei einer variablen Drehzahl angetrieben werden kann.

6. Anlage nach einem der vorangegangenen Ansprüche, **dadurch gekennzeichnet, dass** sie eine Hilfsspeicherbatterie (10) umfasst, unabhängig von der Hauptbatterie des Fahrzeuges, wobei die elektrische Versorgung der Anlage, wenn das Fahrzeug geparkt ist, ausschließlich über die Hilfsbatterie gewährleistet wird.

7. Anlage nach Anspruch 6, **dadurch gekennzeichnet, dass** die Hilfsbatterie über eine höhere Nennspannung verfügt als die Hauptbatterie.

8. Anlage nach Anspruch 7, **dadurch gekennzeichnet, dass** die Hilfsbatterie an Bauteilen angeschlossen ist, die nicht an der Klimatisierung beteiligt sind und bei der genannten höheren Spannung betrieben werden.
